# EUROPEAN PATENT APPLICATION

(11) **EP 4 614 453 A1**
(43) Date of publication of application: **10.09.2025**
(21) Application number: 23912501.6
(22) Date of filing: 25.10.2023
(51) Int. Cl.: G06T 19/20, G06T 11/60, G06T 11/20, G06T 5/00, G06T 7/136, G06T 7/13, G06V 30/142, G06T 17/00

(54) **ELECTRONIC DEVICE FOR GENERATING FLOOR PLAN IMAGE, AND CONTROL METHOD OF SAME**

(30) Priority: 27.12.2022 KR 20220186402; 17.03.2023 KR 20230034949
(71) Applicant: Samsung Electronics Co., Ltd., Suwon-si, Gyeonggi-do 16677 (KR)
(72) Inventor: YOON, Sukun, Suwon-si Gyeonggi-do 16677 (KR); CHEN, Jie, Nanjing, Jiangsu 210012 (CN); WU, Longhai, Nanjing, Jiangsu 210012 (CN); LIU, Juan, Nanjing, Jiangsu 210012 (CN); KIM, Minji, Suwon-si Gyeonggi-do 16677 (KR); KIM, Jinho, Suwon-si Gyeonggi-do 16677 (KR); LEE, Hyungsuk, Suwon-si Gyeonggi-do 16677 (KR)
(74) Representative: Appleyard Lees IP LLP
(86) International application number: PCT/KR2023/016594
(87) International publication number: WO 2024/143821

(57) **Abstract**

An electronic device includes: a memory storing at least one instruction; and at least one processor configured to execute the at least one instruction to: change a plurality of non-straight lines in a handwritten image to a plurality of straight lines, identify, based on the plurality of straight lines, a first corner in the handwritten image, identify, based on the first corner, a plurality of spaces in the handwritten image, and obtain a floor map image including the plurality of spaces.

## Description

### [Technical Field]

The disclosure relates to an electronic device for generating a floor map image and a method for controlling the same, and more particularly, to an electronic device for generating a floor map image by using a handwritten image of a floor map of a house, which is drawn by a user and a method for controlling the same.

### [Background Art]

Recently, technologies for providing various services in a house have been developed by using a floor map. Examples of those technologies are communication technologies and diversification of Internet of Things (IoT) products.

In the related art, in order to obtain a floor map of the house, a method of automatically generating a floor map using IoT cloud information received from an outside system (e.g., a cloud network) has been proposed. Also, another proposed method involves an operation of manually editing the floor map by using a mobile device.

In the method of automatically generating a floor map by using IoT cloud information, various IoT devices should be present. Thus, it is difficult to make an accurate floor map of the house. In addition, in the another method of manually editing and generating the floor map by using a mobile device, the mobile device utilizes a touch input function but needs to directly select a type of a room suitable to the floor map and performs an arrangement of rooms in the floor map, so it may be very difficult for general users to use the method to get an accurate floor map of the house.

Therefore, there is a need for a method and system to obtain more efficient and accurate floor map about the house.

### [Disclosure of Invention]

### [Solution to Problem]

According to an aspect of the disclosure, an electronic device includes: a memory storing at least one instruction; and at least one processor configured to execute the at least one instruction to: change a plurality of non-straight lines in a handwritten image to a plurality of straight lines, identify, based on the plurality of straight lines, a first corner in the handwritten image, identify, based on the first corner, a plurality of spaces in the handwritten image, and obtain a floor map image including the plurality of spaces.

The at least one processor may be further configured to execute the at least one instruction to change, based on a starting point and an end point of each of the plurality of non-straight lines in the handwritten image, the plurality of non-straight lines to the plurality of straight lines.

The at least one processor may be further configured to execute the at least one instruction to: based on an intersection being present between a first straight line and a second straight line, among the plurality of straight lines, identify a second corner with respect to the intersection of the first straight line and the second straight line, and based on an intersection being not present between a third straight line and a fourth straight line, among the plurality of straight lines, determine whether the third straight line and the fourth straight line form a third corner based on a distance between the third straight line and the fourth straight line and an angle formed by the third straight line and the fourth straight line.

The at least one processor may be further configured to execute the at least one instruction to: based on the distance between the third straight line and the fourth straight line being less than a first threshold distance and the angle formed by the third straight line and the fourth straight line being greater than a threshold angle, determine that the third straight line and the fourth straight line form a fourth corner, and identify the fourth corner of the third straight line and the fourth straight line by extending one of the third straight line and the fourth straight line.

The at least one processor may be further configured to execute the at least one instruction to identify the plurality of spaces in a shape of a polygon based on a smallest closed loop with the identified first corner as a vertex.

The at least one processor may be further configured to execute the at least one instruction to: based on a determination that a distance between a first edge forming a first space among the plurality of spaces and a second edge forming a second space adjacent to the first space is less than a second threshold distance, identify that the first edge and the second edge are overlapped, and identify, with respect to a midpoint of a long edge between the first edge and the second edge, the plurality of spaces by changing a starting point and an end point of the long edge.

The at least one processor may be further configured to execute the at least one instruction to: obtain information about an object from the handwritten image, and insert the information about the object to the plurality of spaces.

The at least one processor may be further configured to execute the at least one instruction to: recognize a text in the handwritten image, and based on the recognized text, obtain information about the plurality of spaces.

The at least one processor may be further configured to execute the at least one instruction to obtain the floor map image by disposing an object in the plurality of spaces based on the information about the plurality of spaces.

The at least one processor may be further configured to execute the at least one instruction to: recognize at least one of a number and a text in the handwritten image, and change the plurality of spaces according to information corresponding to sizes of the plurality of spaces that are obtained based on the at least one of the number and the text.

According to an aspect of the disclosure, a method of controlling an electronic device, includes: changing a plurality of non-straight lines in a handwritten image to a plurality of straight lines; identifying, based on the plurality of straight lines, a first corner in the handwritten image; identifying, based on the first corner, a plurality of spaces in the handwritten image; and obtaining a floor map image including the plurality of spaces.

The changing the plurality of non-straight lines may include, changing, based on a starting point and an end point of each of the plurality of non-straight lines in the handwritten image, the plurality of non-straight lines to the plurality of straight lines.

The identifying the plurality of spaces may include: based on an intersection being present between a first straight line and a second straight line, among the plurality of straight lines, identifying a second corner with respect to the intersection of the first straight line and the second straight line; and based on an intersection being not present between a third straight line and a fourth straight line, among the plurality of straight lines, determining whether the third straight line and the fourth straight line form a third corner based on a distance between the third straight line and the fourth straight line and an angle formed by the third straight line and the fourth straight line.

The identifying the second corner may include: based on the distance between the third straight line and the fourth straight line being less than a first threshold distance and the angle formed by the third straight line and the fourth straight line being greater than a threshold angle, determining that the third straight line and the fourth straight line form a corner, and identifying the second corner of the third straight line and the fourth straight line by extending one of the third straight line and the fourth straight line.

The identifying the plurality of spaces may include identifying the plurality of spaces in a shape of a polygon based on a smallest closed loop with the identified first corner as a vertex.

### [Brief Description of Drawings]

The above and other aspects, features, and advantages of certain embodiments of the disclosure will be more apparent from the following description taken in conjunction with the accompanying drawings, in which:
FIG. 1 illustrates an operation of an electronic device and a display device according to one or more embodiments of the disclosure;
FIG. 2 illustrates a configuration of an electronic device according to one or more embodiments of the disclosure;
FIG. 3 illustrates a configuration of generating a floor map image according to one or more embodiments of the disclosure;
FIG. 4 illustrates a handwritten image obtained by an electronic device according to one or more embodiments of the disclosure;
FIG. 5 illustrates an embodiment of cropping a handwritten image by a user according to one or more embodiments of the disclosure;
FIGS. 6, 7, 8, and 9 illustrate an embodiment of obtaining a corrected floor map image according to one or more embodiments of the disclosure;
FIG. 10 illustrates a handwritten image, a floor map image, and a three-dimensional floor map image displayed on an electronic device according to one or more embodiments of the disclosure;
FIG. 11 illustrates an embodiment in which an object is inserted into a 3D floor map image according to one or more embodiments of the disclosure;
FIG. 12 illustrates an embodiment in which a 3D floor map image is transmitted to an external display device according to one or more embodiments of the disclosure;
FIG. 13 illustrates an embodiment in which an object included in a handwritten image is recognized, according to one or more embodiments of the disclosure;
FIG. 14 illustrates an embodiment in which an object is inserted into a floor map image by recognizing text included in a handwritten image according to one or more embodiments of the disclosure;
FIGS. 15A and 15B illustrate an embodiment in which a number included in a handwritten image is recognized to adjust the size of a plurality of spaces included in a floor map image according to one or more embodiments of the disclosure;
FIG. 16 illustrates a control method of an electronic device for obtaining a floor map image based on a handwritten image, according to one or more embodiments of the disclosure, and
FIG. 17 illustrates a control method for obtaining a floor map image through a system including a server according to another embodiment of the disclosure.

### [Mode for Invention]

Since the disclosure may be variously modified and have several embodiments, specific non-limiting example embodiments of the disclosure will be illustrated in the drawings and be described in detail in the detailed description. However, it should be understood that the disclosure is not limited to the specific embodiments described hereinafter, but includes various modifications, equivalents, and/or alternatives of the embodiments of the disclosure. In relation to explanation of the drawings, similar drawing reference numerals may be used for similar constituent elements.

In case it is determined that in describing embodiments, detailed description of related known technologies may unnecessarily confuse the gist of the disclosure, the detailed description will be omitted.

In addition, the following embodiments may be modified in many different forms, and the scope of the technical spirit of the disclosure is not limited to the following examples. Rather, these embodiments are provided so that this disclosure will be thorough and complete, and will fully convey the technical spirit to those skilled in the art.

The terms used herein are to describe certain embodiments and are not intended to limit the scope of claims. A singular expression includes a plural expression unless otherwise specified.

In this specification, the expressions "have," "may have," "include," or "may include" or the like represent presence of a corresponding feature (for example: components such as numbers, functions, operations, or parts) and does not exclude the presence of additional feature.

In this document, expressions such as "at least one of A [and/or] B," or "one or more of A [and/or] B," include all possible combinations of the listed items. For example, "at least one of A and B," or "at least one of A or B" includes any of (1) at least one A, (2) at least one B, or (3) at least one A and at least one B.

As used herein, the terms "first," "second," or the like may denote various components, regardless of order and/or importance, and may be used to distinguish one component from another, and does not limit the components.

If it is described that a certain element (e.g., first element) is "operatively or communicatively coupled with/to" or is "connected to" another element (e.g., second element), it should be understood that the certain element may be connected to the other element directly or through still another element (e.g., third element).

On the other hand, if it is described that a certain element (e.g., first element) is "directly coupled to" or "directly connected to" another element (e.g., second element), it may be understood that there is no element (e.g., third element) between the certain element and the another element.

Also, the expression "configured to" used in the disclosure may be interchangeably used with other expressions such as "suitable for," "having the capacity to," "designed to," "adapted to," "made to," and "capable of," depending on cases. The term "configured to" does not necessarily mean that a device is "specifically designed to" in terms of hardware.

Instead, under some circumstances, the expression "a device configured to" may mean that the device "is capable of' performing an operation together with another device or component. For example, the phrase "a processor configured to perform A, B, and C" may mean a dedicated processor (e.g., an embedded processor) for performing the corresponding operations, or a generic-purpose processor (e.g., a central processing unit (CPU) or an application processor) that can perform the corresponding operations by executing one or more software programs stored in a memory device.

Terms such as "module," "unit," "part," and so on are used to refer to an element that performs at least one function or operation, and such element may be implemented as hardware or software, or a combination of hardware and software. Further, except for when each of a plurality of "modules," "units," "parts," and the like needs to be realized in an individual hardware, the components may be integrated in at least one module or chip and be realized in at least one processor.

The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. Such a controller may be implemented in hardware or a combination of hardware and software and/or firmware. The functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as Read Only Memory (ROM), Random Access Memory (RAM), a hard disk drive, a Compact Disc (CD), a Digital Video Disc (DVD), or any other type of memory. A "non-transitory" computer readable medium excludes wired, wireless, optical, or other communication links that transport transitory electrical or other signals. Anon-transitory computer readable medium includes media where data can be permanently stored and media where data can be stored and later overwritten, such as a rewritable optical disc or an erasable memory device.

Various elements and regions in the figures are shown out of scale. Accordingly, the scope of the disclosure is not limited by the relative sizes or spacing drawn from the accompanying drawings.

Hereinafter, with reference to the attached drawings, embodiments will be described in detail so that those skilled in the art to which the disclosure belongs to can easily make and use the embodiments.

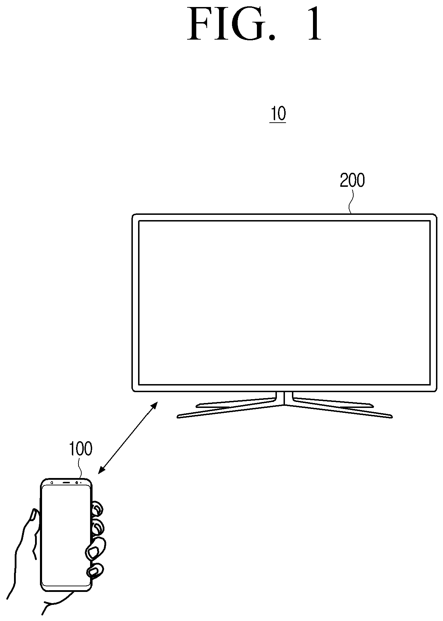

FIG. 1 is a diagram illustrating an operation of a system 10 including an electronic device 100 and a display device 200 according to one or more embodiments. As illustrated in FIG. 1, the system 10 may include the electronic device 100 and the display device 200. Here, the electronic device 100 may include, for example, at least one of a smartphone, a tablet personal computer (PC), a laptop PC, a netbook computer, a mobile medical device, or a wearable device, but is not limited thereto. Accordingly, FIG. 1 illustrates an embodiment in which the electronic device 100 is implemented as a smartphone, but is not limited thereto.

Also, the display device 200 may be implemented as various devices capable of reproducing image content by including a display such as a smart TV, a tablet, a monitor, a desktop computer, a laptop computer, etc. The display device 200 according to one or more embodiments of the disclosure is not limited to the above-described devices, and the display device 200 may be implemented with an external electronic device having two or more functions of the above-described devices.

The electronic device 100 may obtain a handwritten image for generating a floor map image. In this case, the handwritten image may be an image in which a user directly draws an image in a house. Here, the handwritten image may be an image obtained by capturing an image the user draws on a paper, and may be an image drawn through a touch input inputted on a screen in the electronic device 100, but is not limited thereto. In the above-described embodiment, the handwritten image has been described as an image of a space (e.g., an area, a room, a chamber) in a house directly drawn by a user, but this is merely an embodiment, and the image may be a handwritten image which a user directly draws a space (e.g., an area, a room) divided into a plurality of spaces (e.g., areas, rooms, chambers) like a company, a store, and entities that are different from a house.

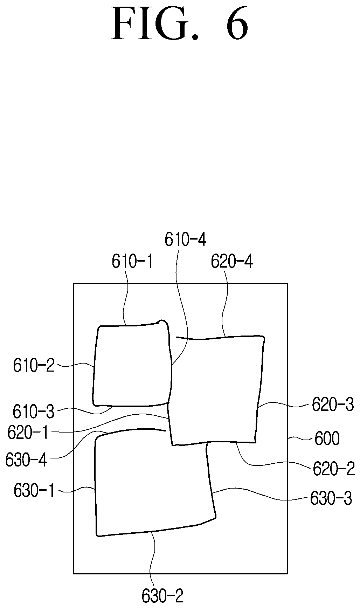

The electronic device 100 may obtain a floor map image by correcting a plurality of spaces included in the handwritten image. Specifically, the electronic device 100 corrects a plurality of lines included in the handwritten image to a straight line. The electronic device 100 identifies a corner included in the handwritten image based on the plurality of corrected straight lines. The electronic device 100 identifies a plurality of spaces included in the handwritten image based on the identified corner. The electronic device 100 obtains a floor map image including a plurality of spaces. A method of obtaining a floor map image by correcting a plurality of spaces included in the handwritten image by the electronic device 100 will be described with reference to FIGS. 6 to 9.

In addition, the electronic device 100 may inserts an object (e.g., window, door, home appliances, etc.) on the floor map image. For example, the electronic device 100 may insert an object on the floor map image by recognizing an object or a text included in the handwritten image, and a user may insert an object into the floor map image.

The electronic device 100 may control an external home appliance by touching an object included in the obtained floor map image. The electronic device 100 may obtain a three-dimensional (3D) floor map image through the obtained floor map image.

In addition, the electronic device 100 may transmit a floor map image or a 3D floor map image to the display device 200. The display device 200 may display the transmitted floor map image or the 3D floor map image on a screen.

Through this, a user may obtain the floor map image in a house through the handwritten image, and may control various home appliances in a house using a floor map image displayed on the electronic device 100 or the display device 200.

In the embodiment described above, the electronic device 100 generates a floor map image, but this is merely an example and the display device 200 or an external server, or the like, may generate the floor map image by obtaining a handwritten image.

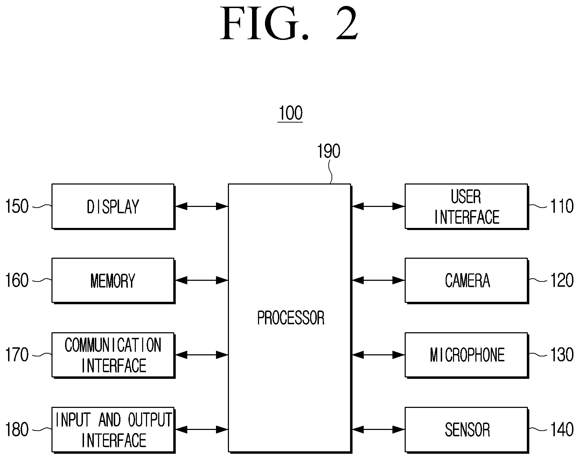

FIG. 2 is a block diagram illustrating a configuration of an electronic device according to one or more embodiments of the disclosure. The electronic device 100 according to one or more embodiments of the disclosure may include, as shown in FIG. 2, a user interface 110, a camera 120, a microphone 130, a sensor 140, a display 150, a memory 160, a communication interface 170, and a processor 190. However, this is merely an embodiment, and some components may be removed or added according to the type of the electronic device 100. For example, when the electronic device 100 is implemented as a set-top box, the electronic device 100 may not include the display 150. In one embodiment, the processor 190 may be a plurality of processors.

The user interface 110 may include a button, a lever, a switch, a touch-type interface, or the like. At this time, the touch-type interface may be implemented with a way to receive an input by a user's touch on a screen of the display 150 of the electronic device 100.

In particular, the user interface 110 may obtain a touch input for obtaining a handwritten image on a screen. That is, the user interface 110 may obtain a handwritten image of the space in a house drawn by the user through a touch input that is inputted on the display 150.

In addition, the user interface 110 may receive a user input to edit the floor map image or insert/remove an object to/from the floor map image.

The camera 120 may capture a still image and a moving image. The camera 120 according to one or more embodiments of the disclosure may include one or more lenses, an image sensor, an image signal processor, and a flash. The one or more lenses may include a telephoto lens, a wide angle lens, and a super wide angle lens disposed on the surface of the electronic device 100, and may include a 3D depth lens. The camera 120 may be disposed on a surface (e.g., a rear surface or a front surface) of the electronic device 100, but the embodiment is not limited to such a configuration, and one or more embodiments according to the disclosure may be implemented through connection with the camera 120 separately existing outside the electronic device 100.

**In** particular, the camera 120 may capture a handwritten image that is an image of a space in a house a user draws on paper or on other surfaces.

The microphone 130 may refer to a device that detects a sound and converts the sound into an electrical signal. For example, the microphone 130 may detect a voice in real time, and convert the detected voice into an electrical signal, and the electronic device 100 may perform an operation corresponding to the electrical signal. The microphone 130 may include a text-to-speech (TTS) module or an speech-to-text (STT) module.

The microphone 130 may include not only a case where the microphone 130 is included as one element of the electronic device 100 but also one element of a remote control to control the display device 200.

Specifically, the microphone 130 may detect a voice including a user command for generating a floor map image, and convert the voice including the user command into an electric signal so that the electronic device 100 may control the operation of the camera 120 for generating a floor map image based on the electric signal. In addition, when the microphone 130 is included as one component of a remote controller for controlling the display device 200, a floor map image generating/editing operation may be performed through the display device 200 by a user command input through a microphone provided in the remote controller.

The remote controller of the electronic device 100 or the display device 200 may include the microphone 130, and may include a configuration to convert voice for voice recognition to an electric signal.

According to another embodiment of the disclosure, a case may be included that a remote controller APP may be installed in the electronic device 100 to detect a user voice command through the microphone 130, and an operation of generating/editing, or the like, a floor map image may be performed through the voice recognition function.

The sensor 140 may detect the state (e.g., movement) of the electronic device 100 or external environment state (e.g., user state), and may generate an electric signal or a data value corresponding to the detected state. The sensor 140 may, for example, include a gesture sensor and an acceleration sensor.

The sensor 140 may include a gesture sensor, and the electronic device 100 may perform an operation of generating a floor map image by detecting a preset user gesture to generate a floor map image.

The display 150 may include various types of display panels such as a liquid crystal display panel (LCD) panel, an organic light emitting diode (OLED) display panel, an active matrix organic light emitting diode (AM-OLED), a liquid crystal on silicon (LcoS), quantum dot light-emitting diode (QLED), digital light processing (DLP), plasma display panel (PDP), inorganic LED pan, micro LED panel, or the like, but is not limited thereto. The display 150 may configure a touch screen together with the touch panel and may be formed of a flexible panel.

The display 150 may display various screens for performing each step for generating a floor map image. For example, the display 150 may display a screen for inputting a handwritten image, a screen for editing a handwritten image, a screen for editing a floor map image, a screen for editing a three-dimensional floor map image, a screen for controlling an object included in the floor map image, or the like.

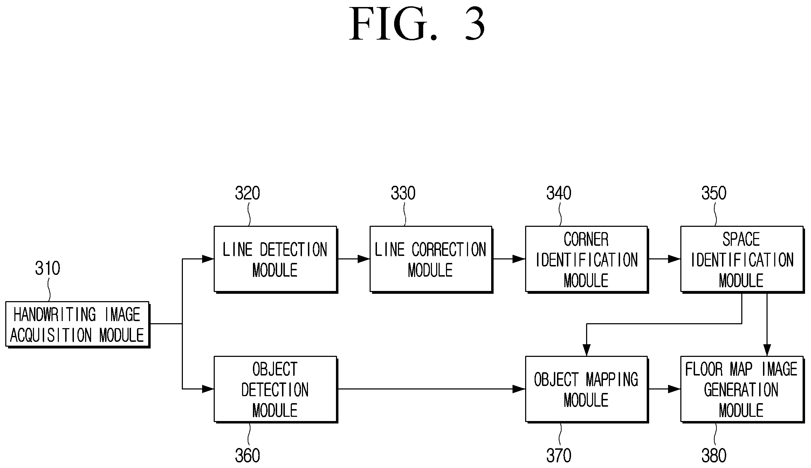

The memory 160 may store an operating system (OS) for controlling the overall operation of the components of the electronic device 100 and instructions or data related to components of the electronic device 100. In particular, to generate a floor map image, the memory 160 may include the handwritten image acquisition module 310, the line detection module 320, the line correction module 330, the corner identification module 340, the space identification module 350, the object detection module 360, the object mapping module 370, and a floor map image generation module 380 as illustrated in FIG. 3. In particular, when a function for generating a floor map image is executed, the electronic device 100 may load data for performing various operations to a volatile memory by various modules for generating a floor map image stored in the non-volatile memory. Here, the loading refers to an operation of loading and storing data stored in a nonvolatile memory in a volatile memory so that the processor 190 may access.

The memory 160 may store information about a neural network model, or the like, to correct lines or spaces included in the handwritten image.

In the meantime, the memory 160 may also include a memory in a non-volatile memory (e.g., a hard disk, a solid state drive (SSD), a flash memory), and a volatile memory, and the like.

The communication interface 170 may include at least one circuitry and may communicate with various types of external devices or servers. The communication interface 170 may include least one of a Bluetooth Low Energy (BLE) module, a Wi-Fi communication module, a cellular communication module, a 3G mobile communication module, a 4th generation (4G) mobile communication module, a 4G Long Term Evolution (LTE) communication module, or a 5G mobile communication module.

In particular, the communication interface 170 may obtain a handwritten image from an external device. In addition, the communication interface 170 may transmit a handwritten image to the external display device 200 or server. In addition, the communication interface 170 may transmit a floor map image or a 3D floor map image to the external display device 200 or server.

The input and output interface 180 is configured to input and output at least one of an audio signal and an image signal. For example, the input and output interface 180 may be high definition multimedia interface (HDMI), but this is merely an example and may be one interface among mobile high-definition link (MHL), universal serial bus (USB), display port (DP), Thunderbolt, video graphics array (VGA) port, RGB port, d-subminiature (D-SUB), digital visual interface (DVI), and the like. According to implementation embodiment, the input and output interface 180 may separate include a port to input or output only an audio signal and a port to input or output an image signal, or one port to input or output both audio signal and image signal.

In particular, the electronic device 100 may receive a handwritten image from an external device through the input and output interface 180 or may transmit a floor map image.

The processor 190 may control the electronic device 100 according to at least one instruction stored in the memory 160.

In particular, the processor 190 may include one or more processors. In one embodiment, one or more processors may include one or more of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, or a machine learning accelerator. The one or more processors may control one or any combination of other components of the electronic device and may perform operations or data processing relating to the communication. The one or more processors may execute one or more programs or instructions stored in the memory. For example, one or more processors may perform a method in accordance with one or more embodiments of the disclosure by executing one or more instructions stored in a memory.

When a method according to one or more embodiments of the disclosure includes a plurality of operations, a plurality of operations may be performed by one processor or may be performed by a plurality of processors. That is, when a first operation, a second operation, and a third operation are performed by a method according to one or more embodiments, all of the first operation, the second operation, and the third operation may be performed by the first processor, the first operation and the second operation may be performed by a first processor (e.g., a general purpose processor), and the third operation may be performed by a second processor (e.g., an artificial intelligence (AI) dedicated processor). For example, according to one or more embodiments of the disclosure, an operation of identifying a corner in the handwritten image or correcting a space in the handwritten image may be performed by a processor to perform parallel calculation like GPU or NPU, and an operation to generate/edit a floor map image or a post-processing operation, or the like, may be performed by a universal processor like CPU.

The one or more processors may be implemented as a single core processor including one core, or may be implemented as one or more multicore processors including a plurality of cores (for example, homogeneous multi-cores or heterogeneous multi-cores). When the one or more processors are implemented as a multi-core processor, each of the plurality of cores included in the multi-core processor may include a processor internal memory such as a cache memory and an on-chip memory, and a common cache shared by the plurality of cores may be included in the multi-core processor. In addition, each of a plurality of cores (or a part of a plurality of cores) included in the multi-core processor may independently read and perform a program command for implementing a method according to one or more embodiments of the disclosure, and may read and perform a program command for implementing a method according to one or more embodiments of the disclosure in connection with all (or a part of) a plurality of cores.

When the method according to one or more embodiments of the disclosure includes a plurality of operations, the plurality of operations may be performed by one core among a plurality of cores included in the multi-core processor or may be performed by the plurality of cores. For example, when a first operation, a second operation, and a third operation are performed by a method according to one or more embodiments, all the first operation, second operation, and third operation may be performed by a first core included in the multi-core processor, and the first operation and the second operation may be performed by a first core included in the multi-core processor and the third operation may be performed by a second core included in the multi-core processor.

In the embodiments of the disclosure, the processor 190 may mean a system-on-chip (SoC), a single core processor, a multi-core processor, or a core included in a single core processor or a multi-core processor in which one or more processors and other electronic components are integrated, wherein the core may be implemented as a CPU, a GPU, an APU, a MIC, a DSP, an NPU, a hardware accelerator, or a machine learning accelerator, but embodiments of the disclosure are not limited thereto.

In particular, the processor 190 corrects a plurality of lines included in a handwritten image drawn by a user to a straight line. In addition, the processor 190 identifies a plurality of spaces included in the handwritten image based on a corner included in the handwritten image identified according to the plurality of corrected straight lines. Further, the processor 190 obtains a floor map image including the plurality of spaces.

Further, the processor 190 may correct the plurality of lines to the plurality of straight lines based on a starting point and an end point of each of the plurality of lines included in the handwritten image.

Based on identifying an intersection being present between two straight lines among the plurality of corrected straight lines, the processor 190 may identify a corner with respect to an intersection of two straight lines where the intersection is present. Based on identifying an intersection being not present between two straight lines among the plurality of corrected straight lines, the processor 190 may determine whether two straight lines without the intersection form a corner based on a distance between two straight lines and an angle formed by two straight lines without the intersection. That is, based on a distance between the two straight lines without the intersection being less than a first threshold distance and the angle formed by the two straight lines being greater than a threshold angle, the processor 190 may determine that two straight lines without the intersection form a corner. The processor 190 may identify a corner of two straight lines without the intersection by extending one of the two straight lines without the intersection.

**In** addition, the processor 190 may identify the plurality of spaces in a shape of a polygon based on a smallest closed loop with the identified corner as a vertex. Here, if it is determined that the distance between the first edge constituting one space among a plurality of spaces and the second edge constituting a space adjacent to one space is less than a second threshold distance, the processor 190 may identify that the first edge and the second edge are overlapped. The processor 190 may identify a plurality of spaces by correcting a starting point and an ending point of a long edge with respect to a middle point of the first longer edge between the first edge and the second edge.

In addition, the processor 190 may obtain information about an object from the handwritten image. The processor 190 may insert information about an object on a plurality of spaces identified based on the obtained information about the object.

In addition, the processor 190 may recognize a text included in the handwritten image. The processor 190 may obtain information about the plurality of spaces based on the recognized text. At this time, the processor 190 may obtain a flor map image by disposing an object in a plurality of spaces based on the information about a plurality of spaces.

In addition, the processor 190 may recognize at least one of the number and text included in the handwritten image. The processor 190 may correct a plurality of spaces based on the size information of a plurality of spaces according to information corresponding to the obtained size of a plurality of spaces based on at least one of the recognized number and text.

FIG. 3 is a block diagram illustrating a configuration of generating a floor map image according to one or more embodiments of the disclosure. As illustrated in FIG. 3, the electronic device 100 may include a handwritten image acquisition module 310, a line detection module 320, a line correction module 330, a corner identification module 340, a space identification module 350, an object detection module 360, an object mapping module 370, and a floor map image generation module 380.

The handwritten image acquisition module 310 may obtain a handwritten image from various sources. According to one or more embodiments, the handwritten image acquisition module 310 may obtain a handwritten image drawn by a user through a touch input on a screen of an application for generating a floor map image.

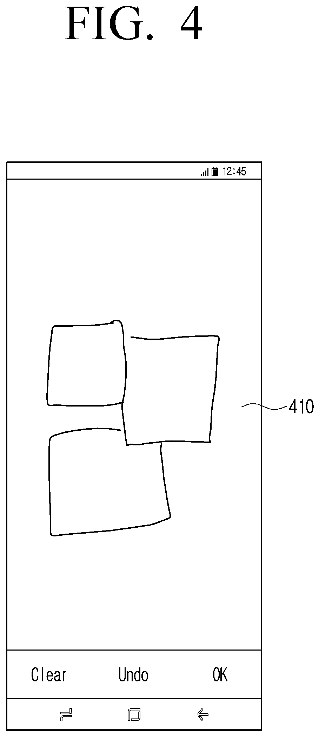

In one embodiment, an option of generating a floor map image using the electronic device 100 is selected on the display device 200, and the display device 200 may transmit a request signal to generate the floor map image to the electronic device 100. In response to a request signal, a guide message (or a pop-up message) may be displayed on the electronic device 100. When a user command to generate a floor map image is input through a guide message, the handwritten image acquisition module 310 may display a screen of an application to generate a floor map image. At this time, on the screen of the application as illustrated in FIG. 4, a menu like Clear, Undo, and OK may be provided. When the handwritten image is drawn on a screen through a touch input and an OK menu is selected, the handwritten image acquisition module 310 may obtain a handwritten image 410 drawn on an application screen.

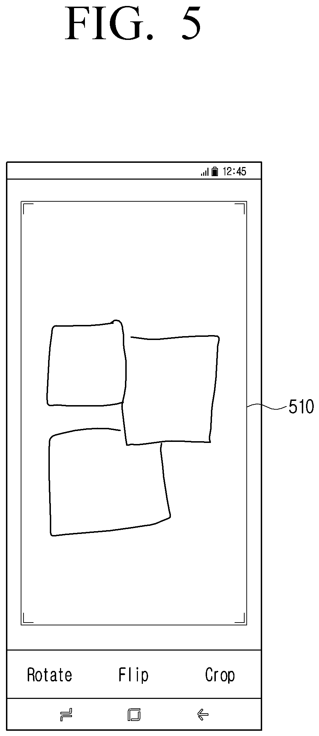

In addition, the handwritten image acquisition module 310 may crop the handwritten image displayed on an application screen according to a user touch input. For example, handwritten image acquisition module may, as illustrated in FIG. 5, crop a range designated according to the user's touch input that is inputted on an execution screen of an application and may obtain the cropped handwritten image 510. In this case, the handwritten image acquisition module 310 may rotate or flip the handwritten image according to a user input.

However, as described above, obtaining a handwritten image through a touch input on a screen of an application is merely an embodiment, and a handwritten image may be obtained by various methods. As another embodiment, the handwritten image acquisition module 310 may obtain a handwritten image drawn by a user on paper or various surfaces. Alternatively, the handwritten image acquisition module 310 may receive a handwritten image from an external device through the communication interface 170 or the input and output interface 180. Alternatively, handwritten image acquisition module 310 may obtain the handwritten image by reading the handwritten image stored in the memory 160. In the meantime, the handwritten image acquisition module 310 may edit captured handwritten image, received handwritten image, or stored handwritten image according to the user input.

The line detection module 320 may detect a plurality of lines included in the handwritten image. At this time, the line detection module 320 may detect a plurality of lines by recognizing a starting point and an end point of each of a plurality of lines. The line detection module 320 may detect a plurality of lines included in the handwritten image by using a method like a Hough transform technology.

For example, as illustrated in FIG. 6, the line detection module 320 may detect twelve lines 610-1,610-2,...,630-4 in the handwritten image 600.

The line correction module 330 may correct each of a plurality of detected lines into a straight line. In one embodiment, the line correction module 330 may correct a plurality of lines to a straight line based on the starting point and the end point included in each of a plurality of lines. That is, the line directly drawn by a user is not a straight line so the line correction module 330 may correct each of a plurality of lines to a straight line by connecting the starting point and the end point.

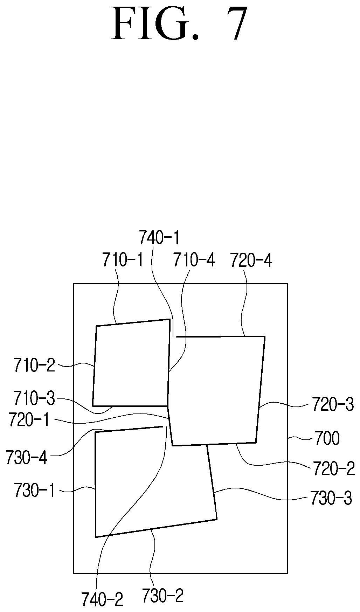

For example, the line correction module 330 may correct 12 straight lines 610-1, 610-2, ... , 630-4 of FIG. 6 to 12 straight lines 710-1, 710-2, ... ,730-4 as illustrated in FIG. 7 by connecting each starting point and an end point.

The corner identification module 340 may identify a corner by detecting intersection points of a plurality of corrected straight lines. However, when a person directly draws a polygon, as illustrated in FIG. 7, there are spaces 740-1 and 740-2 between lines and lines may not be connected. Therefore, it is necessary to determine whether such a case is an intersection. In one embodiment, the corner identification module 340 may determine whether there is an intersection among a plurality of corrected straight lines. At this time, if an intersection is present between two straight lines among a plurality of corrected straight lines, the corner identification module 340 may identify a corner based on an intersection of two straight lines where an intersection is present.

**In** one embodiment, when there is no intersection between the two straight lines among the corrected plurality of straight lines, the corner identification module 340 may determine whether the two straight lines without the intersection form a corner based on the distance between the two straight lines without the intersection and the angle formed by the two straight lines. Specifically, when the distance between the two straight lines without an intersection is within the first threshold distance and the angle formed by the two straight lines is greater than the threshold angle, the corner identification module 340 may determine that the two straight lines without an intersection form a corner. In addition, the corner identification module 340 may identify a corner of two straight lines without an intersection by extending one of two straight lines without an intersection. The corner identification module 340 may correct an image so that all straight lines have an intersection by repeatedly performing this operation for all the lines.

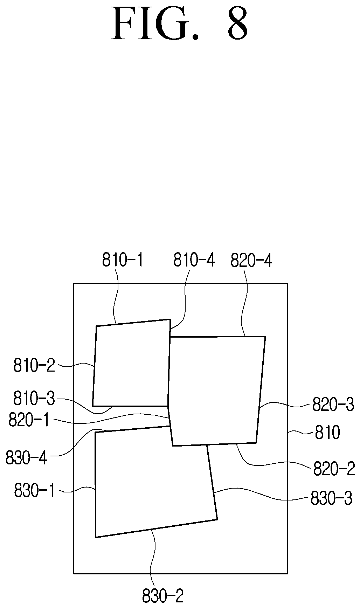

**In** one embodiment, as illustrated in FIG. 7, the fourth straight line 710-4 and the eighth straight line 720-4 are not connected to each other and the fifth straight line 720-1 and the twelfth straight line 730-4 are not connected to each other, but the corner identification module 340 may, as illustrated in FIG. 8, extend the eighth straight line 820-4 and the twelfth straight line 830-4 so that an intersection is present.

At this time, the first threshold distance and the threshold angle may be determined through previous learning process, and may be set by a user input later.

Also, the corner identification module 340 may determine whether two straight lines without an intersection form a corner by using the trained neural network model. Specifically, the corner identification module 340 may input a handwritten image including a plurality of corrected straight lines to the trained neural network model to correct the image so that there is no space between the two points. The trained neural network model may be trained based on various handwritten images, and the first threshold distance and the threshold angle may be set based on the space between the two lines included in the handwritten image used for learning and the angle between the two lines.

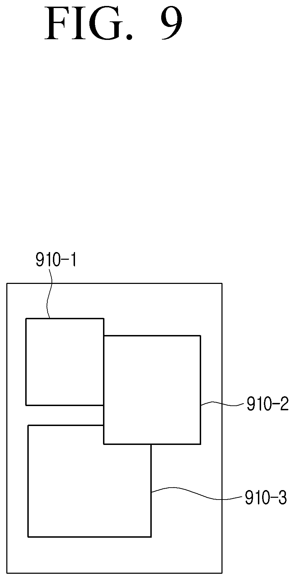

The space identification module 350 may identify the plurality of spaces in a shape of a polygon based on a smallest closed loop with the identified corner as a vertex. In this case, the plurality of polygonal spaces may be configured to have an edge (e.g., a wall), and each space may be indicated as an edge. In particular, when it is determined that the distance between the first edge forming one of the plurality of spaces and the second edge forming a space adjacent to one space is less than the second threshold distance, the space identification module 350 may identify that the first edge overlaps the second edge. That is, the first edge and the second edge may be identified as an edge on a same axis. In addition, the space identification module 350 may identify a plurality of spaces by correcting a starting point and an end point of a long edge with respect to a midpoint of a long edge between the first edge and the second edge. That is, the space identification module 350 may correct an entire layout of a plurality of spaces by correcting a starting point and an end point of a long edge in a form of Manhattan vertical layout. For example, the space identification module 350 may identify three spaces 910-1 910-2, 910-3 by correcting a plurality of spaces as illustrated in FIG. 9.

The space identification module 350 may correct a plurality of spaces using a pre-trained neural network model. That is, as illustrated in FIG. 8, the space identification module 350 may input an image including a polygon formed of a closed loop to the trained neural network model and output an image in which the plurality of spaces included in the image are corrected in the Manhattan vertical layout method.

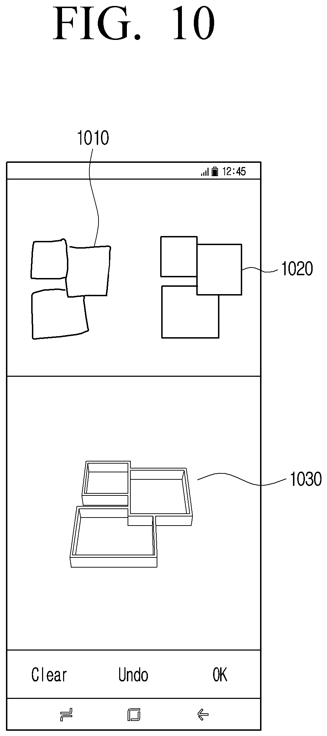

The floor map image generation module 380 may generate a floor map image based on a plurality of spaces identified by the space identification module 350. In addition, the floor map image generation module 380 may obtain a 3D floor map image based on the obtained floor map image. In addition, the floor map image generation module 380 may, as illustrated in FIG. 10, display an execution screen of an application including a handwritten image 1010, a floor map image 1020, and a 3D floor map image 1030.

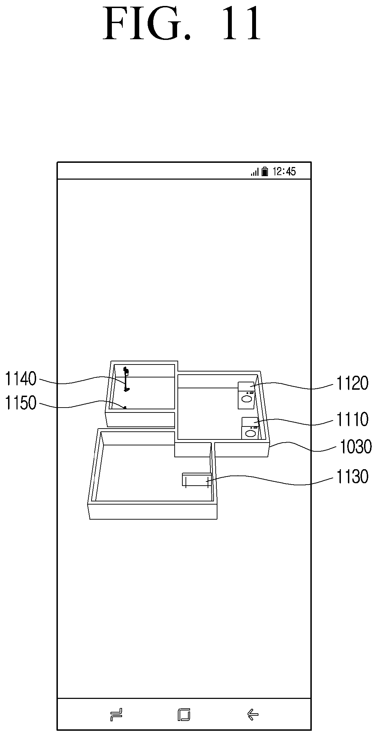

In particular, the floor map image generation module 380 may insert an object (e.g., a home appliance) into the floor map image 1020 or the three-dimensional floor map image 1030 through the execution screen of the application of FIG. 10. For example, as illustrated in FIG. 11, the floor map image generation module 380 may insert the plurality of objects 1110 to 1150 into the three-dimensional floor map image 1030. Alternatively, if each of a plurality of spaces included in the floor map image 1020 or the 3D floor map image 1030 is designated, the floor map image generation module 380 may automatically insert a home appliance disposed in a corresponding space stored in the cloud. For example, if one space among a plurality of spaces included in the 3D floor map image 1030 is designated as kitchen, the floor map image generation module 380 may automatically insert a home appliance disposed in a kitchen stored in the cloud to a kitchen space.

In addition, when a first account is logged into an external server, the floor map image generation module 380 may provide a UI for recommending to add information about a home appliance registered in a plurality of spaces corresponding to the logged first account to the floor map image, or add the registered home appliance to the floor map image and provide the same.

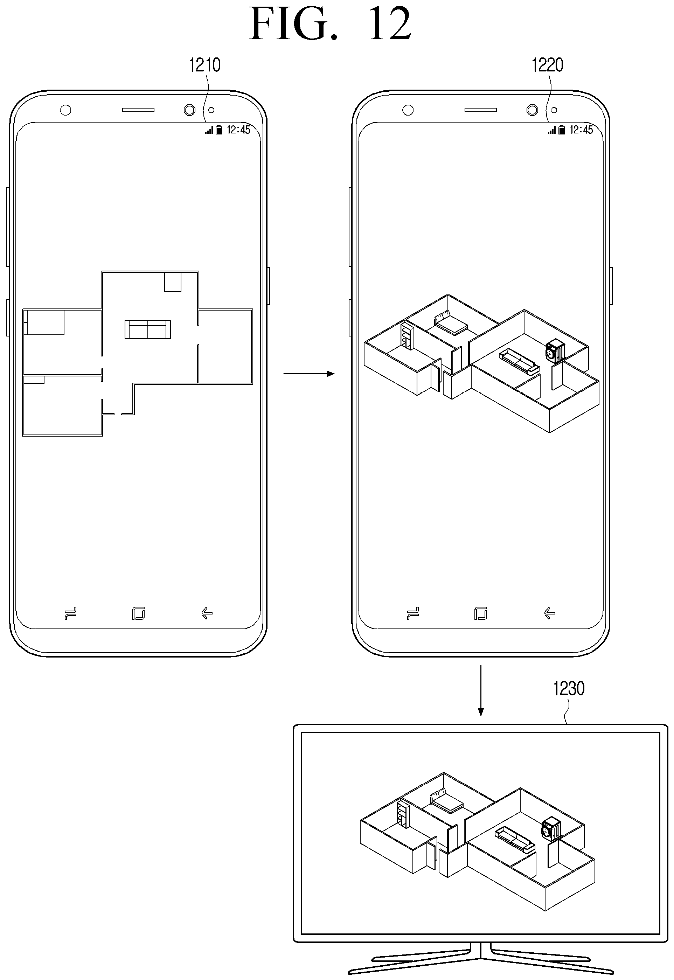

In addition, the floor map image generation module 380 may generate a floor map image through an application installed in the electronic device 100 and designate each of a plurality of spaces in the floor map image generated according to a user input. In this case, the floor map image generation module 380 may additionally edit a room shape, a size, and a name according to a user input, and may also designate a location of a home appliance disposed in the corresponding space. After the editing process is performed, the floor map image generation module 380 may obtain a floor map image 1210 into which an object such as a home appliance is inserted, as shown in the first drawing of FIG. 12. In addition, the floor map image generation module 380 may, as the second drawing of FIG. 12, generate the 3D floor map image 1220 through 3D simulation. In addition, the floor map image generation module 380 may transmit the generated 3D floor map image 1220 to another display device 200 stored in the IoT account. Therefore, the display device 200 may, as illustrated in the third drawing of FIG. 12, provide a 3D floor map image 1230 obtained through the electronic device 100.

The object detection module 360 may detect an object included in a handwritten image. At this time, an object may include a door, a window, or the like, but this is merely an embodiment, and may include various home appliances.

In one embodiment, the object detection module 360 may obtain information about a type of an object and a location of an object by detecting an object included in the handwritten image.

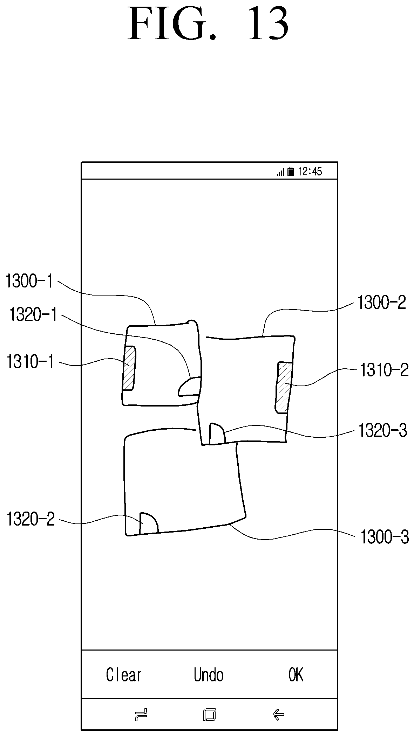

For example, as illustrated in FIG. 13, when the first indicators 1310-1 and 1310-2 corresponding to two windows and the second indicators 1320-1, 1320-2, and 1320-3 corresponding to three doors are included in the handwritten image, the object detection module 360 may recognize the first indicators 1310-1 and 1310-2 and the second indicators 1320-1, 1320-2, and 1320-3 included in the handwritten image and obtain information about the types and locations of the plurality of objects included in the handwritten image. That is, the object detection module 360 may obtain information about a window and a door located in the first space 1300-1, a window and a door located in the second space 1300-2, and a door located in the third space 1300-3.

In the meantime, in the above embodiment, it has been described that an object like a window or a door is detected, but this is merely an embodiment, and a home appliance may be detected. At this time, the object detection module 360 may obtain information (type and location of a home appliance, etc.) about a home appliance by recognizing an indicator or a text corresponding to each of a home appliance.

The object mapping module 370 may insert the information about the object into the plurality of spaces based on the information about the object obtained from the object detection module 360. Specifically, the object mapping module 370 may insert the detected object into the plurality of spaces corrected based on the location information (or coordinate information) of the object obtained from the object detection module 360. The floor map image generation module 380 may obtain a floor map image in which an object is inserted into a plurality of spaces.

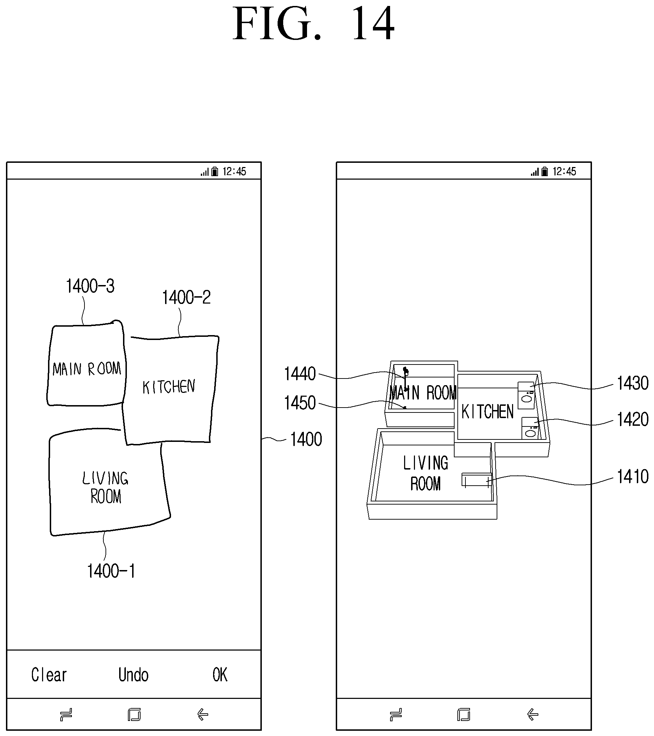

In the meantime, according to one or more embodiments of the disclosure, the processor 190 may recognize a plurality of spaces by recognizing a text included in the handwritten image, and may insert an object to a plurality of spaces in the floor map image. FIG. 14 is a diagram illustrating an embodiment in which an object is inserted into a floor map image by recognizing text included in a handwritten image according to one or more embodiments of the disclosure.

As illustrated in the left drawing of FIG. 14, a text indicating each space may be included in the handwritten image. The processor 190 may recognize a text indicating each space by using various methods such as optical character recognition (OCR), or the like. The processor 190 may obtain information about a plurality of spaces based on a recognition result. That is, the processor 190 may recognize that a first space 1400-1 is a living room, a second space 1400-2 is a kitchen, and a third space 1400-3 is a main room based on the recognition result. In addition, the processor 190 may automatically insert a home appliance to the floor map image based on basic platform information with respect to the corresponding space stored in the cloud based on information about a plurality of spaces. In one embodiment, the cloud may store basic platform information for a plurality of spaces. At this time, the basic platform information may include various information like default floor map structure with respect to the corresponding space, arrangement of an object (e.g., home appliance, etc.) included in the space, information about the size of the corresponding space, or the like. At this time, the basic platform information may be pre-stored according to a type of a corresponding house, an address of the corresponding house. For example, as illustrated in the right of FIG. 14, the processor 190 may obtain information about a home appliance arranged as a default for a plurality of spaces included in the basic platform information included in the cloud. The processor 190 may arrange a first household product 1410 on a living room among a floor map images based on the information about a home appliance arranged as a default, arrange a second home appliance 1420 and a third home appliance 1430 in the kitchen, and a fourth home appliance 1440 and a fifth home appliance 1450 in the main room. Therefore, the processor 190 may obtain the floor map image in which a home appliance is arranged in a place automatically recognized. In addition, the processor 190 may provide a UI for editing information about a plurality of spaces included in the floor map image 1520 or arrange a home appliance on a plurality of spaces.

In addition, as illustrated in the right drawing of FIG. 14, a recognized text may be displayed on each space. Further, the electronic device 100 may provide a UI for correcting a recognized text.

In addition, when a plurality of spaces are identified based on the recognized text (or when the user inputs identification information about the plurality of spaces on the plurality of spaces included in the floor map image), the electronic device 100 may obtain the floor map image by adding home appliances registered on the plurality of identified spaces. Specifically, information about home appliances registered in a plurality of spaces corresponding to the registered account may be stored in the cloud. Specifically, when logging in with the first account, information about home appliances registered in a plurality of spaces corresponding to the first account may be stored. For example, a home appliance registered in a main room among a plurality of spaces corresponding to a first account may be "an air conditioner, a TV", a home appliance registered in a living room is "an air conditioner, an air purifier, a TV," and a home appliance registered in kitchen may be "a refrigerator, a dishwasher, and a cooking device." Therefore, the electronic device 100 may provide a floor map image by adding home appliances registered in a plurality of spaces stored in the cloud. Alternatively, the electronic device 100 may provide a UI for proposing to add a home appliance registered in a plurality of spaces stored in a cloud to a floor map image.

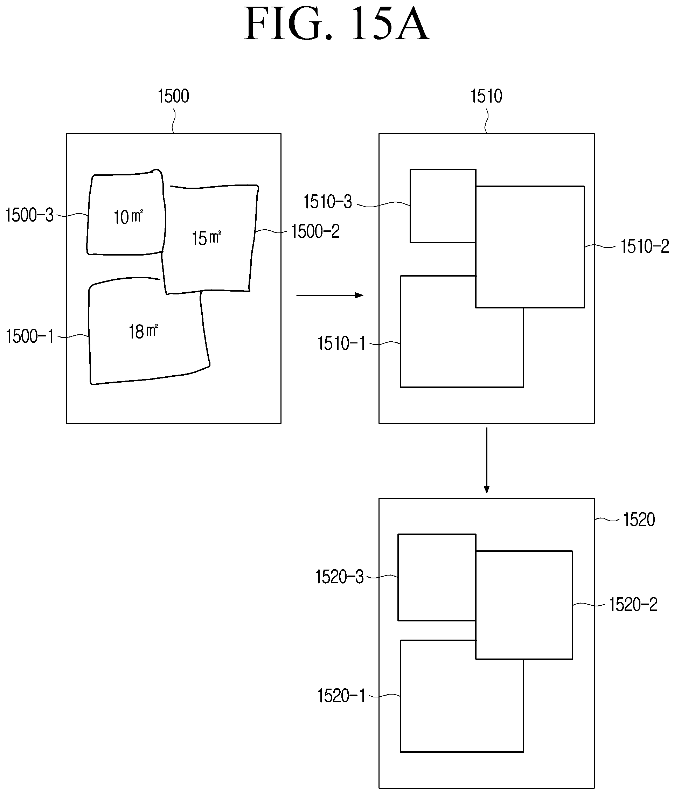

In the meantime, according to one or more embodiments of the disclosure, the processor 190 may recognize a size of a plurality of spaces by recognizing a number or text included in the handwritten image, and may adjust the size of a plurality of spaces included in the floor map image. FIGS. 15A is a diagram illustrating an embodiment in which a number included in a handwritten image is recognized to adjust the size of a plurality of spaces included in a floor map image according to one or more embodiments of the disclosure.

As shown in the first diagram of FIG. 15A, a text indicating each space may be included in the handwritten image 1500. The processor 190 may recognize various methods such as optical character recognition (OCR) by using numbers or text indicating the size of each space. The processor 190 may obtain size information for a plurality of spaces based on the recognition result. That is, the processor 190 may recognize that the size of the first space 1500-1 is 18 square meters (m²), the size of the second space 1500-2 is 15 m², and the size of the third space 1500-3 is 10 m² based on the recognition result. In addition, as described above with reference to FIGS. 6 to 9, the processor 190 may obtain a floor map image 1510 including first to third spaces 1510-1, 1510-2, 1510-3, as shown in the second drawing of FIG. 15A. At this time, the processor 190 may adjust the size of the floor map image 1510 based on the information about the previously recognized size of the plurality of spaces. That is, the processor 190 may obtain a floor map image 1520 including first to third spaces 1520-1,1520-2,1520-3 of which the size is adjusted, as shown in the third drawing of FIG. 15A, based on the information about the size of the plurality of spaces. In addition, the processor 190 may provide a UI for adjusting the size of a plurality of spaces included in the floor map image 1520.

In the meantime, the processor 190 may provide a UI for selecting whether to reflect the size information (e.g., area) indicated by a user when generating a floor map image. That is, when a user input to reflect size information indicated by a user is received through a UI, the processor 190 may, when generating a floor map image, as illustrated in FIG. 15A, adjust the size of a plurality of spaces included in the floor map image 1520 according to the size information about a plurality of spaces indicated by a user.

In addition, the processor 190 may simultaneously provide a floor map image in which the size of a plurality of spaces is adjusted according to the size information of a plurality of spaces indicated by the user and a floor map image (that is, a floor map image of which size is not adjusted according to the information about the size of a plurality of spaces indicated by a user) drawn by a user, and may select one of two map images based on the user input.

In addition, even if the ratio of the plurality of spaces included in the handwritten image is different from the ratio of the plurality of spaces, the processor 190 may recognize information about the size of the plurality of spaces by recognizing the number or text written by the user, and optimally modify the size ratio of the plurality of spaces on the floor map image. In this case, the optimal size ratio for the plurality of spaces may be included in the basic platform pre-stored in the electronic device 100 or stored in the cloud. In addition, the processor 190 may provide a UI capable of adjusting the size of the plurality of spaces.

In the above embodiment, it is described that the information about the size of each space is obtained in the unit of m², but this is merely an embodiment, and information about each space may be obtained in various units like square meters, square feet, square yards or other units related to floors, areas, or rooms.

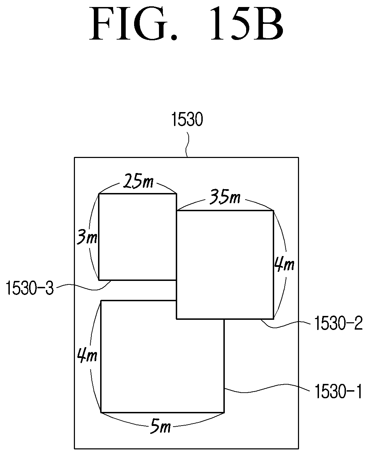

In addition, as illustrated in FIG. 15B, size of each space may be input as the size of width and length, and the electronic device 100 may obtain information about a size of the plurality of spaces 1530-1, 1530-2, 1530-3 based on the recognized size of width and length.

In addition, when a user indicates "XX square meters" in the handwritten image, the electronic device 100 may automatically change the unit to another unit (e.g., square feet) on the floor map image. In addition, the electronic device 100 may display information about the size of the space in the floor map image in a unit desired by a user according to user setting.

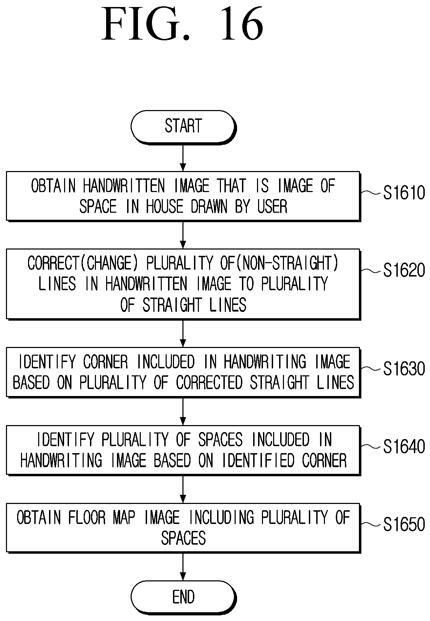

FIG. 16 is a flowchart illustrating a control method of an electronic device for obtaining a floor map image based on a handwritten image, according to one or more embodiments of the disclosure.

First of all, the electronic device 100 obtains a handwritten image that is an image of a space in a house drawn by a user in operation S1610.

The electronic device 100 corrects (or change) a plurality of (non-straight) lines in the handwritten image to a plurality of straight lines in operation S 1620. At this time, the electronic device 100 may recognize a starting point and an end point of each of a plurality of lines included in the handwritten image. The electronic device 100 may correct the plurality of lines to the plurality of straight lines based on a starting point and an end point of the plurality of recognized lines.

The electronic device 100 identifies a corner included in the handwritten image based on a plurality of corrected straight lines in operation S1630. In particular, the electronic device 100 may determine whether an intersection is present among the plurality of corrected straight lines. In addition, based on identifying an intersection being present between two straight lines among the plurality of corrected straight lines, the electronic device 100 may identify a corner with respect to an intersection of two straight lines where the intersection is present. **In** addition, based on identifying an intersection being not present between two straight lines among the plurality of corrected straight lines, the electronic device 100 may determine whether two straight lines without the intersection form a corner based on a distance between two straight lines and an angle formed by two straight lines without the intersection. In particular, based on a distance between the two straight lines without the intersection being less than a first threshold distance and the angle formed by the two straight lines being greater than a threshold angle, the electronic device 100 may determine that two straight lines without the intersection form a corner, and identify a corner of two straight lines without the intersection by extending one of the two straight lines without the intersection.

The electronic device 100 identifies a plurality of spaces included in the handwritten image based on the identified corner in operation S1640. The electronic device 100 may identify the plurality of spaces in a shape of a polygon based on a smallest closed loop with the identified corner as a vertex. Based on determination that a distance between a first edge forming one space among the plurality of spaces and a second edge forming a space adjacent to the one space is less than a second threshold distance, the electronic device 100 may identify that the first edge and the second edge are overlapped. **In** addition, the electronic device 100 may identify, with respect to a midpoint of a long edge between the first edge and the second edge, the plurality of spaces by correcting a starting point and an end point of the long edge.

The electronic device 100 obtains a floor map image including a plurality of spaces in operation S1650.

At this time, the electronic device 100 may obtain information about the object from the handwritten image. In addition, the electronic device 100 may insert information about the object to the plurality of identified spaces based on the obtained information about the object.

Alternatively, the electronic device 100 may recognize a text included in the handwritten image, and obtain information about the plurality of spaces based on the recognized text. In addition, the electronic device 100 may obtain the floor map image by disposing an object in the plurality of spaces based on the information about the plurality of spaces.

Alternatively, the electronic device 100 may recognize at least one of the number and text included in the handwritten image. In addition, the electronic device 100 may obtain size information of the plurality of spaces based on at least one of the recognized number or text. In addition, the electronic device 100 may correct a plurality of spaces based on information about the size of a plurality of spaces.

The order of each step included in FIG. 16 is merely an example, and the order may be various to generate a floor map image. For example, after performing the corner identification step of S1630 and the space identification step of S1640 first, and then correcting a line of S 1620 into a straight line may be performed.

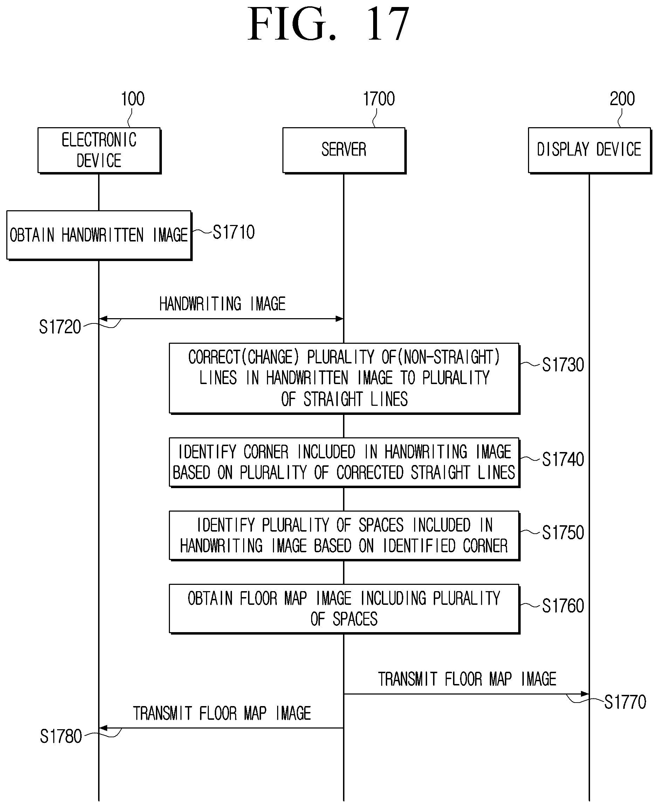

In the embodiment of the disclosure above, it has been described that a floor map image is generated by the electronic device 100 to use the handwritten image, but this is merely an embodiment, and an external device (e.g., display device 200) may generate the floor map image. In addition, the electronic device 100 and the display device 200 may generate the floor map image in association with the server. FIG. 17 is a sequence diagram illustrating a control method for obtaining a floor map image through a system including a server according to another embodiment of the disclosure.

The electronic device 100 may obtain the handwritten image in operation S1710. As described above, the electronic device 100 may obtain the handwritten image based on the touch input that is inputted on the application screen, capture the handwritten image by using the camera 120, receive the handwritten image from the external device, and read the handwritten image stored in the memory 160.

The electronic device 100 may transmit the handwritten image to a server 1700 in operation S 1720.

The server 1700 may correct (change) a plurality of (non-straight) lines in the handwritten image to a plurality of straight lines in operation S1730. The server 1700 may identify a corner included in the handwritten image based on a plurality of corrected straight lines in operation S1740. The server 1700 may identify a plurality of spaces included in the handwritten image based on the identified corner in operation S1750. The server 1700 may obtain a floor map image including a plurality of spaces in operation S 1760. The server 1700 may generate a floor map image based on various pre-stored floor map images. That is, the server 1700 may generate a floor map image by correcting the size of each space of the handwritten image or inserting an object based on the pre-stored floor map.

In addition, the server 1700 may transmit the obtained floor map image to the display device 200 in operation S1770 and may transmit the floor map image to the electronic device 100 in operation S1780.

In the meantime, in the embodiment above, the operation of the server 1700 may be implemented in another electronic device. That is, another electronic device may generate the floor map image based on the handwritten image without the server 1700.

An AI system is a computer system implementing a human level of intelligence, which is self-learning, determines, and improves recognition rate as the machine is used.

The AI technology uses an algorithm which sorts / learns characteristics of input data by itself (deep learning) a technology and a machine learning algorithm are utilized to simulate a function of recognizing, determining, and the like of a human brain.

The elementary techniques include, for example, a language understanding technique for recognizing a human language / character, a visual understanding technique for recognizing an object as a human vision, a reasoning / prediction technique for reasoning and predicting information to predict and logically predict information, a knowledge representation technique for processing experiential information of the robot as knowledge data, and an operation control technique for controlling autonomous travel of the vehicle and movement of a robot.

The processor 190 according to one or more embodiments of the disclosure control the processing of the input data in accordance with a predefined operating rule or AI model stored in the memory 160. The predefined operating rule or AI model is provided through training or learning.

Here, being provided through learning may refer, for example, to, by applying a learning algorithm to a plurality of learning data, a predefined operating rule or AI model of a desired characteristic being made. The learning may be performed in a device itself in which AI according to one or more embodiments is performed, and may be implemented through a separate server/system.

The AI model (e.g., first and second object detection networks) may include a plurality of neural network layers. At least one layer has a plurality of weight values, and performs a layer operation through a result of calculation of a previous layer and an operation of a plurality of weights. Examples of neural networks include, but are not limited to, a convolutional neural network (CNN), a deep neural network (DNN), a recurrent neural network (RNN), a Restricted Boltzmann Machine (RBM), a Deep Belief Network (DBN), a Bidirectional Recurrent Deep Neural Network (BRDNN), a Deep Q-Networks, and a transformer, and the neural network in the disclosure is not limited to the above-described example unless otherwise specified.

Learning algorithm is a method of training a predetermined target device using an enough learning data so that the predetermined target device can make a decision or prediction by itself. Examples of learning algorithms include, but are not limited to, supervised learning, unsupervised learning, semi-supervised learning, or reinforcement learning, and the learning algorithm in the disclosure is not limited to the aforementioned example unless otherwise specified.

According to an example embodiment, a method according to one or more embodiments may be provided included a computer program product. The computer program product may be exchanged between a seller and a purchaser as a commodity. The computer program product may be distributed in the form of a machine-readable storage medium (e.g., a compact disc read only memory (CD-ROM)), or distributed online through an application store (e.g., PLAYSTORE^{™}). **In** the case of online distribution, at least a portion of the computer program product (e.g., downloadable application) may be at least stored temporarily in a storage medium such as a server of a manufacturer, a server of an application store, or a memory of a relay server, or temporarily generated.

The various example embodiments described above may be implemented as software including instructions stored in a machine-readable storage media which is readable by a machine (e.g., a computer). The device may include the electronic device according to the example embodiments of the disclosure, as a device which calls the stored instructions from the storage media and which is operable according to the called instructions.

In the meantime, a machine-readable storage medium may be provided in the form of a non-transitory storage medium. Herein, the term "non-transitory" only denotes that a storage medium does not include a signal (e.g., electromagnetic wave) but is tangible, and does not distinguish the case in which a data is semi-permanently stored in a storage medium from the case in which a data is temporarily stored in a storage medium. For example, "non-transitory storage medium" may refer to a buffer temporarily storing data.

When the instruction is executed by a processor, the processor may perform the function corresponding to the instruction, either directly or under the control of the processor, using other components. The instructions may include a code generated by a compiler or a code executed by an interpreter.

While the disclosure has been shown and described with reference to one or more embodiments thereof, it will be understood by those skilled in the art that various changes in form and details may be made therein without departing from the spirit and scope of the disclosure as defined by the appended claims and their equivalents.

## Claims

1. An electronic device comprising:
a memory storing at least one instruction; and
at least one processor configured to execute the at least one instruction to:
change a plurality of non-straight lines in a handwritten image to a plurality of straight lines,
identify, based on the plurality of straight lines, a first corner in the handwritten image,
identify, based on the first corner, a plurality of spaces in the handwritten image, and
obtain a floor map image including the plurality of spaces.

2. The electronic device of claim 1, wherein the at least one processor is further configured to execute the at least one instruction to change, based on a starting point and an end point of each of the plurality of non-straight lines in the handwritten image, the plurality of non-straight lines to the plurality of straight lines.

3. The electronic device of claim 1, wherein the at least one processor is further configured to execute the at least one instruction to:
based on an intersection being present between a first straight line and a second straight line, among the plurality of straight lines, identify a second corner with respect to the intersection of the first straight line and the second straight line, and
based on an intersection being not present between a third straight line and a fourth straight line, among the plurality of straight lines, determine whether the third straight line and the fourth straight line form a third corner based on a distance between the third straight line and the fourth straight line and an angle formed by the third straight line and the fourth straight line.

4. The electronic device of claim 3, wherein the at least one processor is further configured to execute the at least one instruction to:
based on the distance between the third straight line and the fourth straight line being less than a first threshold distance and the angle formed by the third straight line and the fourth straight line being greater than a threshold angle, determine that the third straight line and the fourth straight line form a fourth corner, and
identify the fourth corner of the third straight line and the fourth straight line by extending one of the third straight line and the fourth straight line.

5. The electronic device of claim 1, wherein the at least one processor is further configured to execute the at least one instruction to identify the plurality of spaces in a shape of a polygon based on a smallest closed loop with the identified first corner as a vertex.

6. The electronic device of claim 5, wherein the at least one processor is further configured to execute the at least one instruction to:
based on a determination that a distance between a first edge forming a first space among the plurality of spaces and a second edge forming a second space adjacent to the first space is less than a second threshold distance, identify that the first edge and the second edge are overlapped, and
identify, with respect to a midpoint of a long edge between the first edge and the second edge, the plurality of spaces by changing a starting point and an end point of the long edge.

7. The electronic device of claim 1, wherein the at least one processor is further configured to execute the at least one instruction to:
obtain information about an object from the handwritten image, and
insert the information about the object to the plurality of spaces.

8. The electronic device of claim 1, wherein the at least one processor is further configured to execute the at least one instruction to:
recognize a text in the handwritten image, and
based on the recognized text, obtain information about the plurality of spaces.

9. The electronic device of claim 8, wherein the at least one processor is further configured to execute the at least one instruction to obtain the floor map image by disposing an object in the plurality of spaces based on the information about the plurality of spaces.

10. The electronic device of claim 1, wherein the at least one processor is further configured to execute the at least one instruction to:
recognize at least one of a number and a text in the handwritten image, and
change the plurality of spaces according to information corresponding to sizes of the plurality of spaces that are obtained based on the at least one of the number and the text.

11. A method of controlling an electronic device, the method comprising:
changing a plurality of non-straight lines in a handwritten image to a plurality of straight lines;
identifying, based on the plurality of straight lines, a first corner in the handwritten image;
identifying, based on the first corner, a plurality of spaces in the handwritten image; and
obtaining a floor map image including the plurality of spaces.

12. The method of claim 11, wherein the changing the plurality of non-straight lines comprises, changing, based on a starting point and an end point of each of the plurality of non-straight lines in the handwritten image, the plurality of non-straight lines to the plurality of straight lines.

13. The method of claim 11, wherein the identifying the plurality of spaces comprises:
based on an intersection being present between a first straight line and a second straight line, among the plurality of straight lines, identifying a second corner with respect to the intersection of the first straight line and the second straight line; and
based on an intersection being not present between a third straight line and a fourth straight line, among the plurality of straight lines, determining whether the third straight line and the fourth straight line form a third corner based on a distance between the third straight line and the fourth straight line and an angle formed by the third straight line and the fourth straight line.

14. The method of claim 13, wherein the identifying the second corner comprises:
based on the distance between the third straight line and the fourth straight line being less than a first threshold distance and the angle formed by the third straight line and the fourth straight line being greater than a threshold angle, determining that the third straight line and the fourth straight line form a corner, and
identifying the second corner of the third straight line and the fourth straight line by extending one of the third straight line and the fourth straight line.

15. The method of claim 11, wherein the identifying the plurality of spaces comprises identifying the plurality of spaces in a shape of a polygon based on a smallest closed loop with the identified first corner as a vertex.
